# EUROPÄISCHE PATENTSCHRIFT

(11) **EP 2 404 357 B1**
(45) Veröffentlichungstag und Bekanntmachung des Hinweises auf die Patenterteilung: **20.07.2016**
(21) Anmeldenummer: 10706155.8
(22) Anmeldetag: 24.02.2010
(51) Int. Cl.: H02J 5/00

(54) **SYSTEM UND VERFAHREN ZUR BERÜHRUNGSLOSEN ENERGIEÜBERTRAGUNG**
SYSTEM AND METHOD FOR NON-CONTACT POWER TRANSMISSION
SYSTÈME ET PROCÉDÉ DE TRANSMISSION D'ÉNERGIE SANS CONTACT

(30) Priorität: 03.03.2009 DE 102009011125
(43) Veröffentlichungstag der Anmeldung: 11.01.2012
(73) Patentinhaber: SEW-EURODRIVE GmbH & Co. KG, 76646 Bruchsal (DE)
(72) Erfinder: MAHLEIN, Jochen, 76139 Karlsruhe (DE); DIETRICH, Volker, 74626 Bretzfeld (DE); EGGER, Björn, 76646 Bruchsal (DE)
(86) Internationale Anmeldenummer: PCT/EP2010/001131
(87) Internationale Veröffentlichungsnummer: WO 2010/099887

(56) Entgegenhaltungen:
- WO-A1-2008/017818
- WO-A2-2007/006400
- DE-A1- 10 158 794
- DE-A1-102006 013 004
- DE-A1-102007 026 896

## Beschreibung

Die Erfindung betrifft ein System und ein Verfahren zur berührungslosen Energieübertragung.

Es ist bekannt, Transformatoren zur berührungslosen Energieübertragung zu verwenden, indem primärseitig eine Wechselspannung angelegt wird und sekundärseitig ein Verbraucher versorgt wird.

**Aus der** WO 2008/017818 A1 **ist eine berührungslose Energieübertragung bekannt, bei der primärseitig die Spannung derart gestellt wird, dass die sekundärseitige Spannung auf einen Sollwert hin geregelt wird.**

**Aus der** DE 10 2006 013 004 A1 **ist ein System zur berührungslosen Energieübertragung und ein Verfahren zum Betreiben eines solchen Systems bekannt.**

Der Erfindung liegt daher die Aufgabe zugrunde, ein System zur berührungslosen Energieübertragung weiterzubilden, wobei eine möglichst hohe Leistung auf kompaktem Raum übertragbar sein soll bei Anlagen mit veränderlicher Verbrauchsleistung.

Erfindungsgemäß wird die Aufgabe bei dem System nach den in Anspruch 1 und bei dem Verfahren nach den in Anspruch 11 angegebenen Merkmalen gelöst.

Wichtige Merkmale der Erfindung bei dem System sind, dass es ein System zur berührungslosen Energieübertragung ist,

umfassend eine an einen Primärleiter des Systems induktiv gekoppelt vorgesehene Sekundärwicklung,
wobei in den Primärleiter ein Wechselstrom eingeprägt und/oder eine Wechselspannung an den Primärleiter angelegt ist,
**wobei**
vom System eine Regeleinrichtung oder Steuereinrichtung umfasst ist, die eine primärseitig angeordnete Stellgröße derart beeinflusst, insbesondere stellt, dass die sekundärseitig an der Sekundärwicklung anliegende Spannung einen kritischen Wert nicht überschreitet,
insbesondere einen um einen Sicherheitsabstandswert erniedrigten kritischen Wert.

Von Vorteil ist dabei, dass mittels der Steuerung der primärseitigen Einspeisung von Strom oder Spannung verhinderbar ist, dass sich im Leerlauffall, also bei entfallender Leistungsabnahme durch den sekundärseitigen Verbraucher, auf der Sekundärseite hohe Spannungen aufbauen, die zu einer Zerstörung führen könnten. Denn bei der Erfindung ist bei geringer oder verschwindender Leistungsentnahme des Verbrauchers die primärseitige Wechselspannung derart reduzierbar, dass gefährlich hohe Spannungen vermeidbar sind. Es ist also erfindungsgemäß eine lastabhängige und somit prozessabhängige Steuerung der Wechselspannung ermöglicht, insbesondere in Abhängigkeit von der erfassten sekundärseitigen Spannung. Somit ist eine Regelung ausführbar. Bei voller Leistungsabnahme des Verbrauchers ist die Wechselspannung erhöhbar, ohne dass sekundärseitig eine gefährlich hohe Spannung entsteht. Somit ist also eine möglichst hohe Leistung auf kompaktem Raum übertragbar, insbesondere bei Anlagen mit veränderlicher Verbrauchsleistung.

Bei einer vorteilhaften Ausgestaltung hat das Überschreiten des kritischen Wertes, insbesondere das um einen Sicherheitsabstand erhöhte Überschreiten, einen Fehler im Systems, wie elektrischer Durchschlag oder Kurzschluss, oder ein anderweitiges Versagen einer Komponente zur Folge. Von Vorteil ist dabei, dass die Sicherheit erhöhbar ist und trotzdem auf kompaktem Raum eine hohe Leistung.

Bei einer vorteilhaften Ausgestaltung ist die primärseitig angeordnete Stellgröße die Frequenz f, die Amplitude und/oder der Effektivwert des Wechselstromes beziehungsweise der Wechselspannung. Von Vorteil ist dabei, dass mittels steuerbarer, in Halbbrücken angeordneter, insbesondere pulsweitenmoduliert angesteuerter Halbleiterschalter diese Größen in einfacher Weise beeinflussbar sind.

Bei einer vorteilhaften Ausgestaltung ist die Sekundärwicklung sowie die Last auf einem bewegbar angeordneten Teil des Systems und die Primärleitung stationär angeordnet. Von Vorteil ist dabei, dass trotz unterschiedlicher Abstände zwischen Primärteil und Sekundärwicklung ein Überschreiten der kritischen Spannungswerte auf dem bewegbaren Teil der Anlage verhinderbar ist.

Bei einer vorteilhaften Ausgestaltung ist der Sekundärwicklung eine Kapazität derart in Reihe oder parallel zugeschaltet vorgesehen, dass die zugehörige Resonanzfrequenz im Wesentlichen der Frequenz des in den Primärleiter eingeprägten Wechselstromes und/oder der Frequenz der am Primärleiter anliegenden Wechselspannung entspricht. Von Vorteil ist dabei, dass auch bei schwacher Kopplung oder schwankendem Kopplungsgrad hohe Wirkungsgrade bei der induktiven berührungslosen Übertragung realisierbar sind.

Mit Frequenz ist hierbei ein fester erster Idealwert gemeint zum Erreichen der größtmöglichen Übertragungsleistung. Somit ist die sekundärseitig induzierte Spannung mittels leichtem Verstimmen der Frequenz des in den Primärleiter eingespeisten Wechselstroms veränderbar. Der wirkliche Istwert der Frequenz weicht dann also ab vom Idealwert, um die sekundärseitig induzierte Wechselspannung zu reduzieren.

Bei einer vorteilhaften Ausgestaltung ist aus der Sekundärwicklung eine Last versorgbar, deren Verbrauchsleistung veränderlich ist, insbesondere von einer Steuerung steuerbar veränderlich ist, insbesondere von einer stationär angeordneten Steuerung steuerbar veränderlich ist. Von Vorteil ist dabei, dass vom in der Anlage ablaufenden Prozess abhängige Verbrauchsleistungen bereitstellbar sind in kompakter Weise, da im Falle geringer oder verschwindender Verbrauchsleistung die Wechselspannung erniedrigt wird und im Falle erhöhter Verbrauchsleistung die Wechselspannung erhöht wird.

Bei einer vorteilhaften Ausgestaltung ist eine Datenübertragung zwischen dem bewegbar angeordneten Teil und einer stationär angeordneten Steuerung ausführbar. Von Vorteil ist dabei, dass eine Regelung mit Rückführung eines Istwertes ermöglicht ist und die Verbrauchsleistung prognostizierbar ist.

Bei einer vorteilhaften Ausgestaltung beeinflusst die Steuerung die Stellgröße prädiktiv. Von Vorteil ist dabei, dass die Wechselspannung primärseitig rechtzeitig erhöhbar ist, bevor die Verbrauchsleistung ansteigt.

Bei einer vorteilhaften Ausgestaltung ist die Regeleinrichtung mit der Einrichtung zur Erzeugung der Wechselspannung integriert ausgebildet, ist also in einem gemeinsamen Gehäuse angeordnet, insbesondere wobei die Regeleinrichtung einen Mikrocontroller oder Mikroprozessor gemeinsam mit einer Steuerelektronik der Einrichtung zur Erzeugung der Wechselspannung benutzt. Von Vorteil ist dabei, dass nur ein geringer Aufwand beim Realisieren der Erfindung notwendig ist.

Bei einer vorteilhaften Ausgestaltung sind Mittel zur Erfassung einer sekundärseitig anliegenden Spannung vorgesehen. Von Vorteil ist dabei, dass diese Werte als Istgrößenwerte für die Regelung in der Regeleinrichtung verwendbar sind.

Bei einer vorteilhaften Ausgestaltung sind die erfassten Spannungswerte berührungslos, insbesondere per elektromagnetischer Funkwellen oder Infrarot, übertragbar oder mittels aufmodulierter hochfrequenter Stromanteile. Von Vorteil ist dabei, dass eine Rückführung vorsehbar ist und somit besonders hoch dynamische Abläufe regelbar sind.

Wichtige Merkmale bei dem Verfahren zur berührungslosen Energieübertragung sind, dass eine an einen Primärleiter induktiv gekoppelt vorgesehene Sekundärwicklung umfasst ist,
wobei in den Primärleiter ein Wechselstrom eingeprägt und/oder eine Wechselspannung an den Primärleiter angelegt wird,
**wobei**
eine primärseitig angeordnete Stellgröße derart beeinflusst wird, insbesondere gestellt wird, dass die sekundärseitig an der Sekundärwicklung anliegende Spannung einen kritischen Wert nicht überschreitet.

Von Vorteil ist dabei, dass in einfacher Weise auf kompaktem Raumbereich induktiv hohe Leistungen übertragbar sind. Insbesondere sind auch geringe Leistungen übertragbar.

Weitere Vorteile ergeben sich aus den Unteransprüchen.

### Bezugszeichenliste

- 1: Einspeisesteller
- 2: induktives Kopplungssystem
- 3: prozessabhängige Last
- 4: Steuerung
- 20: Mittel zur Spannungserfassung
- 21: Regelung
- 22: Rückführgröße

Die Erfindung wird nun anhand von Abbildungen näher erläutert:
In der Figur 1 ist eine erfindungsgemäße Vorrichtung schematisch gezeigt.
In der Figur 2 ist eine andere erfindungsgemäße Vorrichtung schematisch gezeigt.

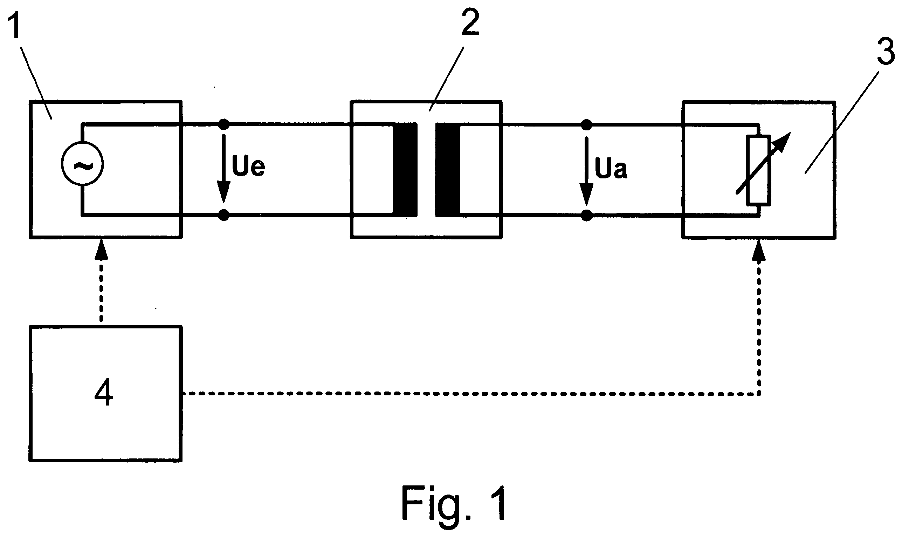

In Figur 1 erzeugt ein Einspeisesteller 1 eine Wechselspannung U_e mit einer Frequenz f. Die Frequenz f, die Amplitude, der Effektivwert oder der Signalverlauf der Wechselspannung U_e ist mittels des Einspeisesteller 1 steuerbar oder alternativ sogar regelbar vorgesehen. Hierbei arbeitet der Wechselrichter vorzugsweise pulsweitenmoduliert.

Diese wird einem induktiven Kopplungssystem 2 zugeführt, das entweder als Transformator ausgeführt ist oder primärseitig einen langgestreckten Linienleiter als Primärleiter umfasst, an den eine entlang der Strecke bewegbar angeordnete Sekundärspule induktiv gekoppelt vorgesehen ist. Der Sekundärspule ist eine Kapazität in Reihe oder parallel zugeschaltet, wobei die zugehörige Resonanzfrequenz im Wesentlichen der Frequenz f des Wechselstromes entspricht.

Aus der Sekundärspule ist eine prozessabhängige Last 3 direkt oder indirekt versorgt, deren Verbrauchsleistung steuerbar ist. Die Steuerung 4 ist mit der steuerbaren Last 3 sowie mit dem Einspeisesteller 1, der ebenfalls steuerbar ist, verbunden.

Somit ist mittels der Steuerung 4 die Last 3 abhängig vom gewünschten Prozessablauf in einen Zustand versetzbar, dem eine wirklich entnommene oder maximal entnehmbare Verbrauchsleistung entspricht. Entsprechend dieser Verbrauchsleistung gibt nun die Steuerung 4 dem Einspeisesteller 1 die mittels der Wechselspannung U_e zu liefernde Versorgungsleistung vor.

Das Steuern des Einspeisestellers 1 durch die Steuerung 4 kann beispielsweise durch Beeinflussung der Frequenz f als Stellgröße erfolgen. Insbesondere wegen der erwähnten resonanten Auslegung führt eine sogar nur geringe Veränderung der Frequenz f_e zu großen Änderungen der maximal übertragbaren Leistung.

Alternativ oder zusätzlich ist auch die Amplitude, der Effektivwert oder der Signalverlauf der Wechselspannung U_e von der Steuerung beeinflussbar und somit ebenfalls die maximal übertragbare Leistung.

Bei einem weiteren erfindungsgemäßen Ausführungsbeispiel umfasst das induktive Kopplungssystem 2 einen vor dem Linienleiter vorgeschalteten, von der Wechselspannung U_e gespeisten Gyrator, mit dem somit an dessen Ausgangsseite dem Linienleiter ein stromquellenartiges Verhalten zur Verfügung stellbar ist. Dabei gleicht die Resonanzfrequenz des Gyrators im Wesentlichen der Frequenz f der Wechselspannung. Sekundärseitig ist ebenso eine inverse Gyratorschaltung vorsehbar, mit der somit das stromquellenartige Verhalten an den Ausgangsklemmen der Sekundärspule in ein spannungsquellenartiges Verhalten an der Ausgangsseite des inversen Gyrators überführbar ist. Hierbei gleicht wiederum die Resonanzfrequenz der Bauteile dieser inversen Gyratorschaltung im Wesentlichen der Frequenz des Wechselstroms.

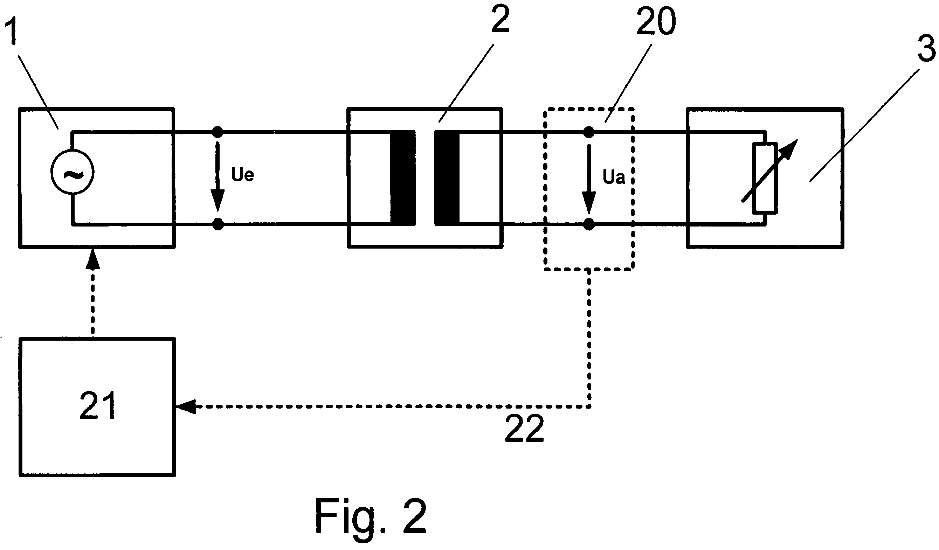

In Figur 2 ist ein weiteres erfindungsgemäßes Ausführungsbeispiel gezeigt, bei dem sekundärseitig ein Mittel 20 zur Spannungserfassung vorgesehen ist, so dass die erfasste Spannung U_a als Rückführgröße 22 verwendbar ist. Die stationär vorgesehene Regelung 21 beeinflusst als Stellgröße wiederum die Frequenz f der vom Einspeisesteller 1 erzeugten Wechselspannung und/oder die Amplitude der zugehörigen erzeugten Wechselspannung. Auf diese Weise ist somit eine Regelung der Spannung U_a hin auf einen jeweiligen zeitlichen Sollwertverlauf ermöglicht.

Da die Last und der Verbraucher bewegbar angeordnet sind, ist eine berührungslose Übertragung der Werte der rückgeführten Größe beispielsweise per Funk oder Infrarot ausgeführt. Ebenso ist auch eine Rückführung mittels auf den Primärleiter aufmodulierter hochfrequenter Strom- oder Spannungsanteile ermöglicht.

Bei der Erfindung ist somit vorteiligerweise eine zu hohe Ausgangsspannung U_a vermeidbar, also ein Überschreiten eines kritischen Wertes derselben. Hierbei sind veränderliche Verbrauchsleistungen berücksichtigbar. Wenn also die Last eine hohe Verbraucherleistung benötigt, wird die Spannung U_e am Wechselrichter entsprechend hoch eingestellt und/oder die Frequenz f möglichst genau auf die Resonanzfrequenz gebracht.

Im Leerlauffall, also im Fall, dass die Last keine Leistung entnimmt, ist es ermöglicht, dass die Wechselspannung U_e auf einen geringen Wert gebracht wird, so dass also Verlustleistungen verkleinerbar sind und hohe sekundärseitige Spannungen U_a vermieden werden.

In Weiterbildung ist auch eine prädiktive Regelung, also eine vorausschauende Regelung, ausführbar. Hierbei wird von der stationär vorgesehenen Steuerung die zu erwartende Leistung der Last berücksichtigt und eine dementsprechend gewählte Wechselspannung U_e und/oder Frequenz f vorgegeben.

Bei einem weiteren erfindungsgemäßen Ausführungsbeispiel umfasst das System einen entlang des Primärleiters verfahrbaren Wagen, an dem die Sekundärwicklung befestigt ist, insbesondere wobei ein Antrieb des Wagens aus der Sekundärwicklung versorgt ist.

## Patentansprüche

1. **System zur berührungslosen Energieübertragung an eine prozessabhängige Last (3), umfassend**
- **ein induktives Kopplungssystem, wobei das induktive Kopplungssystem primärseitig einen langgestreckten Linienleiter als Primärleiter umfasst, an den eine entlang der Strecke bewegbar angeordnete Sekundärspule induktiv gekoppelt vorgesehen ist,**
**wobei der Sekundärspule eine Kapazität in Reihe oder parallel zugeschaltet ist,**
**wobei die zugehörige Resonanzfrequenz der Frequenz f eines in den Primärleiter eingeprägten Wechselstromes entspricht,**
- wobei **von einem Einspeisesteller (1)** in den Primärleiter ein Wechselstrom einprägbar und eine Wechselspannung an den Primärleiter anlegbar ist,
**wobei der Einspeisesteller einen Wechselrichter enthält,**
**wobei der Einspeisesteller eine Wechselspannung U_e mit einer Frequenz f erzeugt,**
**wobei die Frequenz f, die Amplitude, der Effektivwert oder der Signalverlauf der Wechselspannung U_e mittels des Einspeisestellers 1 steuerbar oder alternativ sogar regelbar ist,**
**dadurch gekennzeichnet, dass**
eine Steuereinrichtung (4) vorgesehen ist, **die derart ausgeführt ist, dass diese** eine primärseitig angeordnete Stellgröße derart beeinflusst, insbesondere stellt, dass die sekundärseitig an der Sekundärspule anliegende Spannung einen kritischen Wert nicht überschreitet, insbesondere einen um einen Sicherheitsabstandswert erniedrigten kritischen Wert,
**indem aus der Sekundärspule eine prozessabhängige Last (3) direkt oder indirekt versorgt wird, deren Verbrauchsleistung steuerbar ist,**
**wobei die Steuereinrichtung (4) mit der Last (3) sowie mit dem Einspeisesteller (1), der ebenfalls steuerbar ist, verbunden ist,**
**wobei mittels der Steuereinrichtung (4) die Last (3) abhängig vom gewünschten Prozessablauf in einen Zustand versetzbar ist, dem eine wirklich entnommene oder maximal entnehmbare Verbrauchsleistung entspricht,**
**wobei entsprechend dieser Verbrauchsleistung die Steuerung (4) dem Einspeisesteller (1) die mittels der Wechselspannung U_e zu liefernde Versorgungsleistung vorgibt, indem**
- **bei hoher benötigter Verbraucherleistung die Spannung am Wechselrichter entsprechend hoch eingestellt und/oder die Frequenz f möglichst genau auf die Resonanzfrequenz bringbar ist,**
- **im Fall, dass die Last keine Leistung entnimmt, es ermöglicht ist, dass die Wechselspannung U_e auf einen geringen Wert bringbar ist.**

2. System nach mindestens einem der vorangegangenen Ansprüche,
**dadurch gekennzeichnet, dass**
das Überschreiten des kritischen Wertes, insbesondere das um einen Sicherheitsabstand erhöhte Überschreiten, einen Fehler im System, wie elektrischer Durchschlag oder Kurzschluss, also ein Versagen einer Komponente, zur Folge hat.

3. System nach mindestens einem der vorangegangenen Ansprüche,
**dadurch gekennzeichnet, dass**
die primärseitig angeordnete Stellgröße die Frequenz f, die Amplitude, der Effektivwert, die Signalform und/oder die Form des Zeitverlaufs des Wechselstromes beziehungsweise der Wechselspannung ist.

4. System nach mindestens einem der vorangegangenen Ansprüche,
**dadurch gekennzeichnet, dass**
die Sekundärspule sowie die Last (3) auf einem bewegbar angeordneten Teil des Systems und der Primärleiter stationär angeordnet ist.

5. System nach mindestens einem der vorangegangenen Ansprüche,
**dadurch gekennzeichnet, dass**
aus der Sekundärspule eine Last (3) versorgbar ist, deren Verbrauchsleistung von einer stationär angeordneten Steuereinrichtung steuerbar veränderlich ist.

6. System nach mindestens einem der vorangegangenen Ansprüche,
**dadurch gekennzeichnet, dass**
eine Datenübertragung zwischen dem bewegbar angeordneten Teil und einer stationär angeordneten Steuereinrichtung (4) ausführbar ist.

7. System nach mindestens einem der vorangegangenen Ansprüche,
**dadurch gekennzeichnet, dass**,
die Steuereinrichtung (4) stationär angeordnet ist und die Stellgröße prädiktiv beeinflusst, also derart **vorausschauend, dass von der stationär angeordneten Steuereinrichtung (4) die zu erwartende Leistung der Last berücksichtigt und eine dementsprechend gewählte Wechselspannung U_e und/oder Frequenz f vorgegeben wird.**

8. System nach mindestens einem der vorangegangenen Ansprüche,
**dadurch gekennzeichnet, dass**
Mittel zur Erfassung einer sekundärseitig anliegenden Spannung vorgesehen sind.

9. System nach Anspruch 8,
**dadurch gekennzeichnet, dass**
die erfassten Spannungswerte berührungslos, insbesondere per elektromagnetischer Funkwellen oder Infrarot, übertragbar sind oder mittels aufmodulierter hochfrequenter Strom- oder Spannungsanteile.

10. System nach mindestens einem der vorangegangenen Ansprüche,
**dadurch gekennzeichnet, dass**
das System einen entlang des Primärleiters verfahrbaren Wagen umfasst, an dem die Sekundärwicklung befestigt ist, insbesondere wobei ein Antrieb des Wagens aus der Sekundärwicklung versorgt ist.

11. Verfahren zur berührungslosen Energieübertragung,
umfassend
- **ein induktives Kopplungssystem, wobei das induktive Kopplungssystem primärseitig einen langgestreckten Linienleiter als Primärleiter umfasst, an den eine entlang der Strecke bewegbar angeordnete Sekundärspule induktiv gekoppelt wird,**
**wobei der Sekundärspule eine Kapazität in Reihe oder parallel zugeschaltet ist,**
**wobei die zugehörige Resonanzfrequenz der Frequenz f eines in den Primärleiter eingeprägten Wechselstromes entspricht,**
wobei in den Primärleiter von einem Einspeisesteller (1) ein Wechselstrom eingeprägt und eine Wechselspannung an den Primärleiter angelegt wird,
- **wobei der Einspeisesteller (1) einen Wechselrichter enthält,**
**wobei der Einspeisesteller (1) eine Wechselspannung U_e mit einer Frequenz f erzeugt**
**wobei die Frequenz f, die Amplitude, der Effektivwert oder der Signalverlauf der Wechselspannung U_e mittels des Einspeisestellers 1 gesteuert oder alternativ sogar geregelt wird,**
**dadurch gekennzeichnet, dass**
eine primärseitig angeordnete Stellgröße mittels einer Steuereinrichtung (4) derart beeinflusst, insbesondere gestellt, wird, dass die sekundärseitig an der Sekundärspule anliegende Spannung einen kritischen Wert nicht überschreitet,
**indem aus der Sekundärspule eine prozessabhängige Last (3) direkt oder indirekt versorgt wird, deren Verbrauchsleistung steuerbar ist,**
**wobei die Steuereinrichtung (4) mit der Last (3) sowie mit dem Einspeisesteller (1), der ebenfalls steuerbar ist, verbunden ist,**
**wobei mittels der Steuereinrichtung (4) die Last (3) abhängig vom gewünschten Prozessablauf in einen Zustand versetzt wird, dem eine wirklich entnommene oder maximal entnehmbare Verbrauchsleistung entspricht,**
**wobei entsprechend dieser Verbrauchsleistung die Steuereinrichtung (4) dem Einspeisesteller (1) die mittels der Wechselspannung U_e zu liefernde Versorgungsleistung vorgegeben wird, indem**
- **bei hoher benötigter Verbraucherleistung die Spannung am Wechselrichter entsprechend hoch eingestellt und/oder die Frequenz f möglichst genau auf die Resonanzfrequenz gebracht wird,**
- **im Fall, dass die Last keine Leistung entnimmt, es ermöglicht ist, dass die Wechselspannung U_e auf einen geringen Wert gebracht wird.**

12. Verfahren nach Anspruch 11,
**dadurch gekennzeichnet, dass**
beim Beeinflussen prognostizierte Verläufe oder Werte der an der Sekundär**spule** entnommenen oder zu entnehmenden Leistung, also die Verbraucherleistung, berücksichtigt werden.

13. Verfahren nach Anspruch 11 oder 12,
**dadurch gekennzeichnet, dass**
das Verfahren zum Betreiben eines Systems nach einem der Ansprüche 1 bis 9 verwendet wird.

## Claims

1. System for non-contact energy transmission to a process-dependent load (3),
comprising
- an inductive coupling system, wherein the inductive coupling system comprises on the primary side an elongated line conductor as primary conductor, inductively coupled to which there is provided a secondary coil arranged movably along the line,
wherein a capacitance is connected in series or parallel to the secondary coil,
wherein the associated resonant frequency corresponds to the frequency f of an alternating current impressed into the primary conductor,
- wherein an alternating current can be impressed into the primary conductor and an alternating voltage can be applied to the primary conductor by an infeed controller (1),
wherein the infeed controller includes an inverter,
wherein the infeed controller generates an alternating voltage U_e with a frequency f,
wherein the frequency f, the amplitude, the effective value or the signal profile of the alternating voltage U_e is controllable or alternatively even regulatable by means of the infeed controller 1,
**characterised in that**
a control device (4) is provided, which is designed in such a way that it influences, in particular sets, a control variable arranged on the primary side, in such a way that the voltage applied to the secondary coil on the secondary side does not exceed a critical value, in particular a critical value reduced by a safety margin value,
by a process-dependent load (3) being directly or indirectly supplied from the secondary coil, the consumption power of which is controllable,
wherein the control device (4) is connected to the load (3) and to the infeed controller (1), which is likewise controllable,
wherein by means of the control device (4) the load (3) can be put into a state, depending on the desired process course, which corresponds to an actually drawn or maximum drawable consumption power,
wherein according to this consumption power the control (4) presets the infeed controller (1) with the supply power to be delivered by means of the alternating voltage U_e, by
- in the case of high consumption power required, setting the voltage at the inverter correspondingly high and/or being able to bring the frequency f as precisely as possible to the resonant frequency,
- in the case where the load draws no power, enabling the alternating voltage U_e to be able to be brought to a low value.

2. System according to at least one of the preceding claims,
**characterised in that**
the exceeding of the critical value, in particular the exceeding increased by a safety margin, results in an error in the system, such as electrical breakdown or short-circuit, thus a failure of a component.

3. System according to at least one of the preceding claims,
**characterised in that**
the control variable arranged on the primary side is the frequency f, the amplitude, the effective value, the signal shape and/or the shape of the time profile of the alternating current or of the alternating voltage.

4. System according to at least one of the preceding claims,
**characterised in that**
the secondary coil and the load (3) is arranged on a movably arranged part of the system and the primary conductor is stationarily arranged.

5. System according to at least one of the preceding claims,
**characterised in that**
from the secondary coil a load (3) can be supplied, the consumption power of which is variable in a manner controllable by a stationarily arranged control device.

6. System according to at least one of the preceding claims,
**characterised in that**
a data transmission between the movably arranged part and a stationarily arranged control device (4) is realisable.

7. System according to at least one of the preceding claims,
**characterised in that**
the control device (4) is stationarily arranged and influences the control variable predictively, thus looking ahead in such a way that the expected power of the load is taken into account by the stationarily arranged control device (4) and a correspondingly selected alternating voltage U_e and/or frequency f is preset.

8. System according to at least one of the preceding claims,
**characterised in that**
means for detecting a voltage applied on the secondary side are provided.

9. System according to claim 8,
**characterised in that**
the detected voltage values are transmittable contactlessly, in particular by electromagnetic radio waves or infrared or by means of modulated-on high-frequency current or voltage components.

10. System according to at least one of the preceding claims,
**characterised in that**
the system comprises a carriage movable along the primary conductor, to which the secondary winding is fastened, in particular wherein a drive of the carriage is supplied from the secondary winding.

11. Method for non-contact energy transmission,
comprising
- an inductive coupling system, wherein the inductive coupling system comprises on the primary side an elongated line conductor as primary conductor, inductively coupled to which there is a secondary coil arranged movably along the line,
wherein a capacitance is connected in series or parallel to the secondary coil,
wherein the associated resonant frequency corresponds to the frequency f of an alternating current impressed into the primary conductor,
wherein an alternating current is impressed into the primary conductor by an infeed controller (1) and an alternating voltage is applied to the primary conductor,
- wherein the infeed controller (1) includes an inverter,
wherein the infeed controller (1) generates an alternating voltage U_e with a frequency f,
wherein the frequency f, the amplitude, the effective value or the signal profile of the alternating voltage U_e is controlled or alternatively even regulated by means of the infeed controller 1,
**characterised in that**
a control variable arranged on the primary side is influenced, in particular set, by means of a control device (4) in such a way that the voltage applied to the secondary coil on the secondary side does not exceed a critical value,
by a process-dependent load (3) being directly or indirectly supplied from the secondary coil, the consumption power of which is controllable,
wherein the control device (4) is connected to the load (3) and to the infeed controller (1), which is likewise controllable,
wherein by means of the control device (4) the load (3) can be put into a state, depending on the desired process course, which corresponds to an actually drawn or maximum drawable consumption power,
wherein according to this consumption power the control device (4) presets the infeed controller (1) with the supply power to be delivered by means of the alternating voltage U_e, by
- in the case of high consumption power required, setting the voltage at the inverter correspondingly high and/or bringing the frequency f as precisely as possible to the resonant frequency,
- in the case where the load draws no power, enabling the alternating voltage U_e to be brought to a low value.

12. Method according to claim 11,
**characterised in that**
in the influencing, predicted courses or values of the power drawn or to be drawn at the secondary coil, thus the consumption power, are taken into account.

13. Method according to claim 11 or 12,
**characterised in that**
the method is used for operating a system according to one of claims 1 to 9.

## Revendications

1. Système de transmission d'énergie sans contact à une charge (3) dépendante du processus,
comprenant
- un système de couplage inductif, lequel système de couplage inductif comprend, côté primaire, un conducteur linéaire allongé en tant que conducteur primaire, auquel une bobine secondaire disposée de manière mobile le long du parcours est couplée par induction,
une capacité étant couplée en série ou en parallèle avec la bobine secondaire,
la fréquence de résonance associée correspondant à la fréquence f d'un courant alternatif injecté dans le conducteur primaire,
- un courant alternatif pouvant être injecté dans le conducteur primaire et une tension alternative pouvant être appliquée au conducteur primaire par un module d'alimentation (1),
le module d'alimentation contenant un onduleur,
le module d'alimentation générant une tension alternative U_e à une fréquence f,
la fréquence f, l'amplitude, la valeur efficace ou la forme de signal de la tension alternative U_e pouvant être commandée ou en variante même régulée au moyen du module d'alimentation (1),
**caractérisé en ce que**
un dispositif de commande (4) est prévu, lequel est réalisé de façon que celui-ci influence, en particulier règle, une grandeur réglante disposée côté primaire de façon que la tension présente à la bobine secondaire du côté secondaire ne dépasse pas une valeur critique, en particulier une valeur critique diminuée d'une valeur de marge de sécurité,
une charge (3) dépendante du processus, dont la puissance de consommation est commandable, étant alimentée directement ou indirectement à partir de la bobine secondaire,
le dispositif de commande (4) étant relié à la charge (3) ainsi qu'au module d'alimentation (1) qui est également commandable,
la charge (3) pouvant, au moyen du dispositif de commande (4), être mise dans un état dépendant du déroulement souhaité du processus, auquel correspond une puissance de consommation réellement prélevée ou maximale prélevable,
la commande (4) prescrivant au module d'alimentation (1), en fonction de cette puissance de consommation, la puissance d'alimentation à livrer au moyen de la tension alternative U_e
- en cas de puissance de consommation nécessaire plus élevée, en réglant la tension à l'onduleur à une valeur correspondante et/ou en amenant la fréquence f le plus précisément possible à la fréquence de résonance,
- dans le cas où la charge ne prélève pas de puissance, en permettant que la tension alternative U_e soit amenée à une valeur faible.

2. Système selon au moins l'une des revendications précédentes,
**caractérisé en ce que**
le dépassement de la valeur critique, en particulier le dépassement augmenté d'une marge de sécurité, a pour conséquence un défaut dans le système, comme un claquage électrique ou un court-circuit, donc une défaillance d'un composant.

3. Système selon au moins l'une des revendications précédentes,
**caractérisé en ce que**
la grandeur réglante disposée côté primaire est la fréquence f, l'amplitude, la valeur efficace, la forme de signal et/ou la forme de la variation dans le temps du courant alternatif ou de la tension alternative.

4. Système selon au moins l'une des revendications précédentes,
**caractérisé en ce que**
la bobine secondaire ainsi que la charge (3) sont disposées sur une partie disposée de manière mobile du système et le conducteur primaire est disposé de manière fixe.

5. Système selon au moins l'une des revendications précédentes,
**caractérisé en ce que**
une charge (3), dont la puissance de consommation est variable de façon commandable par un dispositif de commande disposé de manière fixe, peut être alimentée à partir de la bobine secondaire.

6. Système selon au moins l'une des revendications précédentes,
**caractérisé en ce que**
une transmission de données est réalisable entre la partie disposée de manière mobile et un dispositif de commande (4) disposé de manière fixe.

7. Système selon au moins l'une des revendications précédentes,
**caractérisé en ce que**
le dispositif de commande (4) est disposé de manière fixe et influence la grandeur réglante de façon prédictive, c'est-à-dire de telle façon que le dispositif de commande (4) disposé de manière fixe tienne compte de la puissance de la charge attendue et prescrive une tension alternative U_e et/ou une fréquence f choisie en conséquence.

8. Système selon au moins l'une des revendications précédentes,
**caractérisé en ce que**
des moyens sont prévus pour détecter une tension présente côté secondaire.

9. Système selon la revendication 8,
**caractérisé en ce que**
les valeurs de tension détectées sont transmissibles sans contact, en particulier par ondes électromagnétiques ou par infrarouge, ou au moyen de composantes de courant ou de tension à haute fréquence modulées sur la porteuse.

10. Système selon au moins l'une des revendications précédentes,
**caractérisé en ce que**
le système comprend un chariot déplaçable le long du conducteur primaire, sur lequel l'enroulement secondaire est placé, en particulier un entraînement du chariot étant alimenté à partir de l'enroulement secondaire.

11. Procédé de transmission d'énergie sans contact,
comprenant
- un système de couplage inductif, lequel système de couplage inductif comprend, côté primaire, un conducteur linéaire allongé en tant que conducteur primaire, auquel une bobine secondaire disposée de manière mobile le long du parcours est couplée par induction,
une capacité étant couplée en série ou en parallèle avec la bobine secondaire,
la fréquence de résonance associée correspondant à la fréquence f d'un courant alternatif injecté dans le conducteur primaire,
un courant alternatif étant injecté dans le conducteur primaire et une tension alternative appliquée au conducteur primaire par un module d'alimentation (1),
- le module d'alimentation (1) contenant un onduleur,
le module d'alimentation (1) générant une tension alternative U_e à une fréquence f,
la fréquence f, l'amplitude, la valeur efficace ou la forme de signal de la tension alternative U_e étant commandée ou en variante même régulée au moyen du module d'alimentation (1),
**caractérisé en ce que**
une grandeur réglante disposée côté primaire étant influencée, en particulier réglée, au moyen d'un dispositif de commande (4) de façon que la tension présente à la bobine secondaire du côté secondaire ne dépasse pas une valeur critique,
une charge (3) dépendante du processus, dont la puissance de consommation est commandable, étant alimentée directement ou indirectement à partir de la bobine secondaire,
le dispositif de commande (4) étant relié à la charge (3) ainsi qu'au module d'alimentation (1) qui est également commandable,
la charge (3) étant, au moyen du dispositif de commande (4), mise dans un état dépendant du déroulement souhaité du processus, auquel correspond une puissance de consommation réellement prélevée ou maximale prélevable,
le dispositif de commande (4) prescrivant au module d'alimentation (1), en fonction de cette puissance de consommation, la puissance d'alimentation à livrer au moyen de la tension alternative U_e
- en cas de puissance de consommation nécessaire plus élevée, en réglant la tension à l'onduleur à une valeur correspondante et/ou en amenant la fréquence f le plus précisément possible à la fréquence de résonance,
- dans le cas où la charge ne prélève pas de puissance, en permettant que la tension alternative U_e soit amenée à une valeur faible.

12. Procédé selon la revendication 11,
**caractérisé en ce que**
il est tenu compte, lors de l'exercice d'influence, de variations ou de valeurs prédites de la puissance prélevée ou à prélever à la bobine secondaire, donc de la puissance de consommation.

13. Procédé selon la revendication 11 ou la revendication 12,
**caractérisé en ce que**
le procédé est utilisé pour faire fonctionner un système selon l'une des revendications 1 à 9.
